# EUROPEAN PATENT APPLICATION

(11) **EP 1 681 623 A1**
(43) Date of publication of application: **19.07.2006**
(21) Application number: 06000511.3
(22) Date of filing: 11.01.2006
(51) Int. Cl.: G06F 3/048, G06F 3/033

(54) **Device user interface through recognized text and bounded areas**

(30) Priority: 12.01.2005 US 35155; 18.11.2005 WO PCT/US20/05041874
(71) Applicant: Leapfrog Enterprises, Inc., Emeryville, CA 94608-1070 (US)
(72) Inventor: Marggraf, James, Lafayette, CA 94549 (US); Chisholm, Alexander, San Francisco, CA 94110 (US); Edgecomb, Tracy L., Berkeley, CA 94703 (US)
(74) Representative: Ebner von Eschenbach, Jennifer

(57) **Abstract**

A method and system for implementing a user interface for a pen device through recognized text and bounded areas. The method includes recognizing a text string and accessing a function or application related to the text string upon the recognition. An output is provided in accordance with the function and the function is associated with the text string. Alternatively, selection of the text string automatically applies the recognized result of the text string to a currently active application. The method includes recognizing an actuation within a bounded area and automatically accessing a function related to the bounded area upon the actuation. A text string recognized within a bounded area produces an output in accordance with the text string and the bounded area.

## Description

### CROSS REFERENCES TO RELATED APPLICATIONS

This Application is a Continuation-in-Part of the co-pending, commonly-owned U.S. Patent Application, Attorney Docket No. 020824-004610US, Serial No. 10/803,806, filed March 17, 2004, by James Marggraff et al., entitled "Scanning Apparatus," and hereby incorporated by reference in its entirety.

This Application is a Continuation-in-Part of the co-pending, commonly-owned U.S. Patent Application, Attorney Docket No. 020824-009500US, Serial No. 10/861,243, filed June 3, 2004, by James Marggraff et al., entitled "User Created Interactive Interface," and hereby incorporated by reference in its entirety.

This Application is related to U.S. Patent Application "TERMINATION EVENTS", by Marggraff et al., filed on January 12, 2005, Attorney Docket No. LEAP-P0320, that is incorporated herein in its entirety.

This Application is related to U.S. Patent Application "PROVIDING A USER INTERFACE HAVING INTERACTIVE ELEMENTS ON A WRITABLE SURFACE", by Marggraff et al., filed on January 12, 2005, Attorney Docket No. LEAP-PO324, that is incorporated herein in its entirety.

### TECHNICAL FIELD

Embodiments here described relate to the control and use of interactive devices, computers, electronic devices, appliances, toys, and the like. This writing discloses a method and system for implementing a user interface for a device through recognized text and bounded areas.

### BACKGROUND ART

Devices such as optical readers or optical pens conventionally emit light that reflects off a surface to a detector or imager. As the device is moved relative to the surface (or vice versa), successive images are rapidly captured. By analyzing the images, movement of the optical device relative to the surface can be tracked.

One type of optical pen is used with a sheet of paper on which very small dots are printed. The dots are printed on the page in a pattern with a nominal spacing of about 0.3 millimeters (0.01 inches). The pattern of dots within any region on the page is unique to that region. The optical pen essentially takes a snapshot of the surface, perhaps 100 times a second or more. By interpreting the dot positions captured in each snapshot, the optical pen can precisely determine its position relative to the page.

Applications that utilize information about the position of an optical pen relative to a surface have been or are being devised. An optical pen with Bluetooth or other wireless capability can be linked to other devices and used for sending electronic mail (e-mail) or faxes.

The increasing power of embedded computer systems and the complexity of the functions they are able to implement have created a need for a more intuitive and user-friendly manner of accessing such power. A typical prior art optical pen will implement its intended functionality by the user operating one or more buttons/switches or controls of the optical pen to activate one or more software programs, routines, embedded devices, or the like. The pen may contain or be in communication with a computer system. Upon actuation of such controls, the pen device performs its intended function. Accessing the capabilities of increasingly powerful optical pens through the limited number and configuration of switches, buttons, etc. provided on the pen itself, or any remotely coupled computer system device, is not a satisfactory arrangement.

One prior art solution uses the optical pen to recognize a user-defined command, and uses that command to invoke some function of the pen (e.g.,PCT publication WO/01/48590 A1). For example, a user's writing can be recognized (e.g., in real-time) and interpreted as a command for the optical pen. The drawback with this solution involves the fact that interaction and control of the functions of the pen requires real-time recognition of the user's handwriting (e.g., as the user writes the command down on a sheet of paper). This solution is not satisfactory due to the fact that interaction with more complex functionality of an optical pen requires the user to repeatedly write-down one or more commands to access different choices, options, or functions provided by the pen. While the solution might be satisfactory for exceedingly simple, single step type applications (e.g., "turn off', "store", etc.), the solution is overly cumbersome and limiting in those cases where more complex, satisfying, rich functionality is' desired.

### DISCLOSURE

Accordingly, a user interface method and system that enables interaction with more complex functionality of a pen device having a computer system associated their with and enables more efficient access to the different choices, options, and functions provided by the pen device, would be valuable. What is further desired is a user interface and techniques using the same for allowing a user to interact with an operating system of a pen based computer system. Embodiments in accordance with the present invention provide these and other advantages.

In one embodiment, the present invention is implemented as a method for implementing a user interface for a device through recognized text and bounded areas. The method includes recognizing a text string (e.g., a word) and accessing a function related to the text string upon the recognition. An output is provided in accordance with the function and the function is associated with the text string. It is appreciated that in one embodiment, the function is persistently associated with the text string. Therefore, each time the text string is selected by the pen device, the function is invoked for a separate time. In one example, a bounded region is defined which surrounds the text string. Selection of any point within the bounded region by the pen device then indicates a selection of the text string. Exemplary functions can be, for example, translation functions, wherein the text string (e.g., word) is translated from one language (e.g., English) into a different language, dictionary functions, wherein a definition is provided for the word, thesaurus functions, and the like.

The method includes recognizing an actuation (e.g., user writing) within a bounded area and automatically accessing a function or application program related to the bounded area upon the actuation. Exemplary functions can be, for example, calculator functions, wherein text entered within the calculator bounded area is recognized as numerical characters, and the like. In this manner, a text character or text string recognized within a bounded area automatically produces an output in accordance with the text string and also in accordance with the application or function associated with the bounded area. This is accomplished without the user needing to otherwise select the application program which becomes selected automatically in response to the user writing in the bounded area associated with the application.

The output is typically an audio output provided via an audio output device (e.g., a speaker coupled to the device). The function is persistently associated with the text string and/or the bounded area, enabling a subsequent access of the function (e.g., at some later time) by a subsequent actuation (e.g., tapping) of the text string.

Broadly, this writing discloses a method and system for implementing a user interface for a pen device through recognized text and bounded areas. The method includes recognizing a text string and accessing a function or application related to the text string upon the recognition. An output is provided in accordance with the function and the function is associated with the text string. Alternatively, selection of the text string automatically applies the recognized result of the text string to a currently active application. The method includes recognizing an actuation within a bounded area and automatically accessing a function related to the bounded area upon the actuation. A text string recognized within a bounded area produces an output in accordance with the text string and the bounded area.

These and other objects and advantages of the present invention will be recognized by one skilled in the art after having read the following detailed description, which are illustrated in the various drawing figures.

### BRIEF DESCRIPTION OF THE DRAWINGS

The accompanying drawings, which are incorporated in and form a part of this specification, illustrate embodiments of the invention and, together with the description, serve to explain the principles of the invention:
Figure 1 is a block diagram of a device upon which embodiments of the present invention can be implemented.
Figure 2 is a block diagram of another device upon which embodiments of the present invention can be implemented.
Figure 3 shows an exemplary sheet of paper provided with a pattern of marks according to one embodiment of the present invention.
Figure 4 shows an enlargement of a pattern of marks on an exemplary sheet of paper according to one embodiment of the present invention.
Figure 5 shows a computer-controlled flowchart of the steps of a device user interface process in accordance with one embodiment of the present invention.
Figure 6 shows a computer-controlled flowchart of the steps of a hierarchical device user interface process in accordance with one embodiment of the present invention.
Figure 7 shows a menu item tree directory according to an embodiment of the invention.
Figure 8A shows a menu item audible prompting process in accordance with one embodiment of the present invention.
Figure 8B shows a menu item selection process in accordance with one embodiment of the present invention.
Figure 8C shows a sub-menu items selection process in accordance with one embodiment of the present invention.
Figure 9 shows a plurality of different types of graphical item icons on a surface in accordance with one embodiment of the present invention.
Figure 10 shows a flowchart of the computer implemented steps of a bounded area user interface process in accordance with one embodiment of the present invention.
Figure 11 shows a calculator bounded area application in accordance with one embodiment of the present invention.
Figure 12A shows a flowchart of the computer implement steps of a text string recognition user interface process in accordance with a first embodiment of the present invention.
Figure 12B shows a flowchart of the computer implement steps of a text string recognition user interface process in accordance with a second embodiment of the present invention.
Figure 13A shows a first example of a dictionary text string recognition application in accordance with one embodiment of the present invention.
Figure 13B shows a second example of a dictionary text string recognition application in accordance with one embodiment of the present invention.

### DETAILED DESCRIPTION OF THE EMBODIMENTS

Reference will now be made in detail to the preferred embodiments of the present invention, examples of which are illustrated in the accompanying drawings. While the invention will be described in conjunction with the preferred embodiments, it will be understood that they are not intended to limit the invention to these embodiments. On the contrary, the invention is intended to cover alternatives, modifications and equivalents, which may be included within the spirit and scope of the invention as defined by the appended claims. Furthermore, in the following detailed description of embodiments of the present invention, numerous specific details are set forth in order to provide a thorough understanding of the present invention. However, it will be recognized by one of ordinary skill in the art that the present invention may be practiced without these specific details. In other instances, well-known methods, procedures, components, and circuits have not been described in detail as not to unnecessarily obscure aspects of the embodiments of the present invention.

### NOTATION AND NOMENCLATURE

Some portions of the detailed descriptions which follow are presented in terms of procedures, steps, logic blocks, processing, and other symbolic representations of operations on data bits within a computer memory. These descriptions and representations are the means used by those skilled in the data processing arts to convey most effectively the substance of their work to others skilled in the art. A procedure, computer executed step, logic block, process, etc., are here, and generally, conceived to be self-consistent sequences of steps or instructions leading to a desired result. The steps are those requiring physical manipulations of physical quantities. Usually, though not necessarily, these quantities take the form of electrical or magnetic signals capable of being stored, transferred, combined, compared, and otherwise manipulated in a computer system. It has proven convenient at times, principally for reasons of common usage, to refer to these signals as bits, values, elements, symbols, characters, terms, numbers, or the like.

It should be borne in mind, however, that all of these and similar terms are to be associated with the appropriate physical quantities and are merely convenient labels applied to these quantities. Unless specifically stated otherwise as apparent from the following discussions, it is appreciated that throughout the present invention, discussions utilizing terms such as "processing," "computing," " configuring," "generating," or the like, refer to the action and processes of a microcontroller, computer system, or similar electronic computing device, that manipulates and transforms data represented as physical (electronic) quantities within registers and memories into other data similarly represented as physical quantities.

### EMBODIMENTS OF THE INVENTION

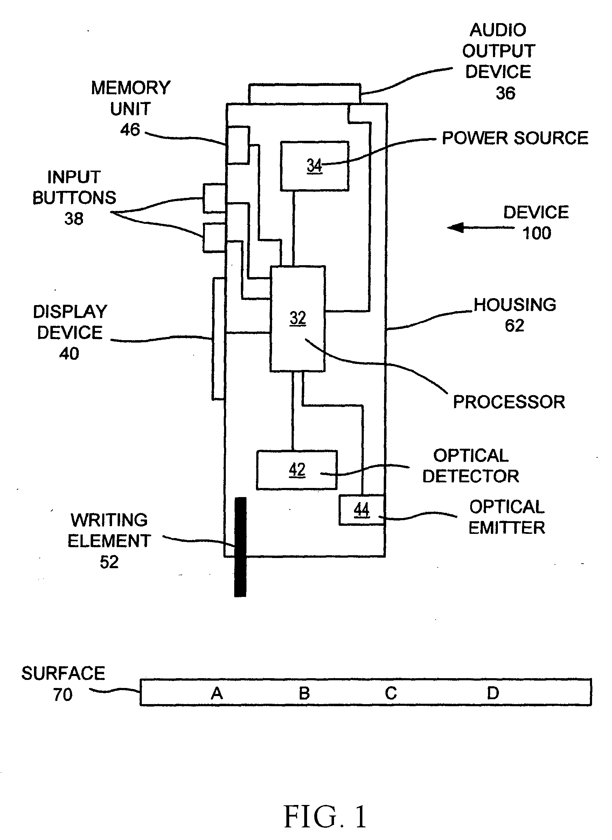

Figure 1 is a block diagram of a pen device 100 upon which embodiments of the present invention can be implemented. In general, pen device 100 may be referred to as an optical device, more specifically as an optical reader, optical pen or digital pen. The device may contain a computer system and an operating system resident thereon. Application programs may also reside thereon.

In the embodiment of Figure 1, pen device 100 includes a processor 32 inside a housing 62. In one embodiment, housing 62 has the form of a pen or other writing or marking utensil or instrument. Processor 32 is operable for processing information and instructions used to implement the functions of pen pen device 100, which are described below.

In the present embodiment, the pen device 100 may include an audio output device 36 and a display device 40 coupled to the processor 32. In other embodiments, the audio output device and/or the display device are physically separated from pen device 100, but in communication with pen device 100 through either a wired or wireless connection. For wireless communication, pen device 100 can include a transceiver or transmitter (not shown in Figure 1). The audio output device 36 may include a speaker or an audio jack (e.g., for an earphone or headphone). The display device 40 may be a liquid crystal display (LCD) or some other suitable type of display.

In the embodiment of Figure 1, pen device 100 may include input buttons 38 coupled to the processor 32 for activating and controlling the pen device 100. For example, the input buttons 38 allow a user to input information and commands to pen device 100 or to turn pen device 100 on or off. Pen device 100 also includes a power source 34 such as a battery.

Pen device 100 also includes a light source or optical emitter 44 and a light sensor or optical detector 42 coupled to the processor 32. The optical emitter 44 may be a light emitting diode (LED), for example, and the optical detector 42 may be a charge coupled device (CCD) or complementary metal-oxide semiconductor (CMOS) imager array, for example. The optical emitter 44 illuminates surface 70 or a portion thereof. Light reflected from the surface 70 is received at and recorded by optical detector 42.

The surface 70 may be a sheet a paper, although the present invention is not so limited. For example, the surface 70 may comprise an LCD (liquid crystal display, CRT (cathode ray tube), touch screen, a surface comprising electronic ink, reconfigurable paper, or other types of electronically active surfaces (e.g., the display of a laptop or tablet PC).

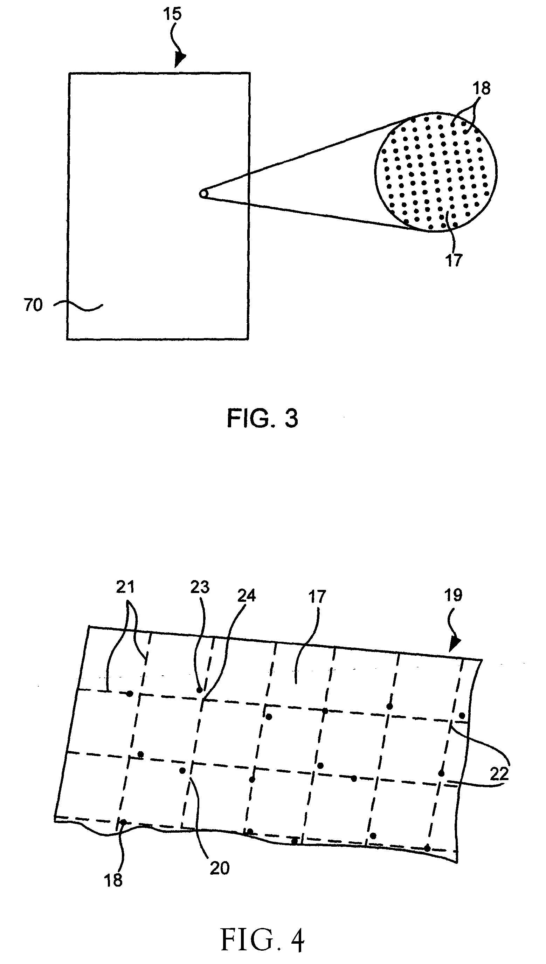

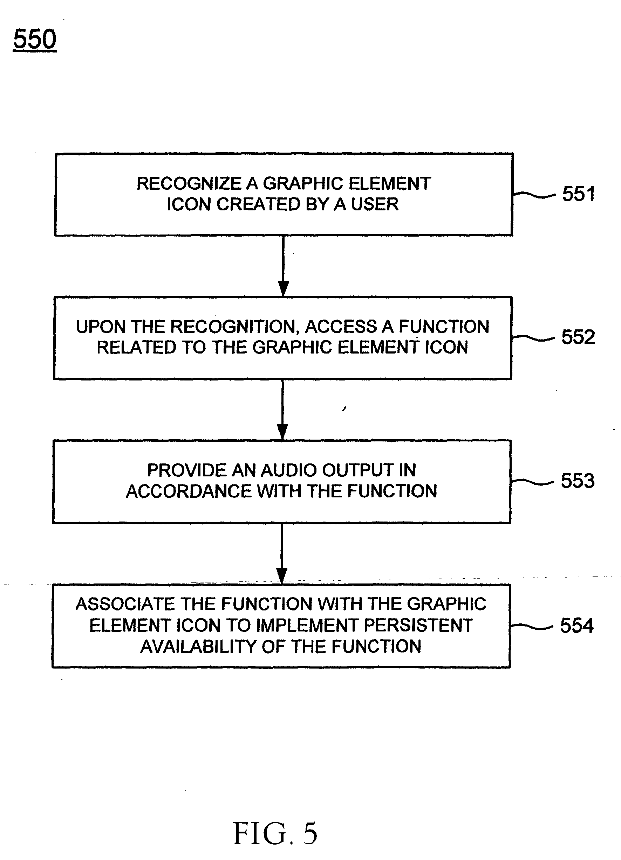

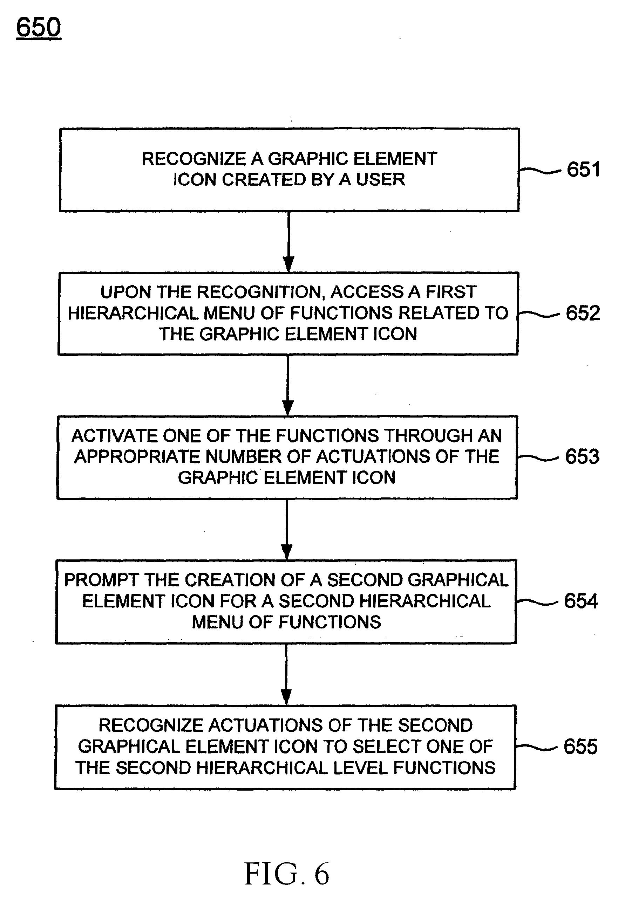

In one embodiment, a pattern of markings is printed on surface 70. The end of pen device 100 that holds optical emitter 44 and optical detector 42 is placed against or near surface 70. As pen device 100 is moved relative to the surface 70, the pattern of markings are read and recorded by optical emitter 44 and optical detector 42. As discussed in more detail further below, in one embodiment, the markings on surface 70 are used to determine the position of pen device 100 relative to surface (see Figures 3 and 4). In another embodiment, the markings on surface 70 are used to encode information (see Figures 5 and 6). The captured images of surface 70 can be analyzed (processed) by pen device 100 to decode the markings and recover the encoded information.

Additional descriptions regarding surface markings for encoding information and the reading/recording of such markings by electronic devices can be found in the following patents and patent applications that are assigned to Anoto and that are all herein incorporated by reference in their entirety: U.S. Patent No. 6,502,756, U.S. Application No. 101179,966, filed on June 26, 2002, WO 01/95559, WO 01/71473, WO 01/75723, WO 01/26032, WO 01/75780, WO 01/01670, WO 01/75773, WO 01/71475, WO 10 00/73983, and WO 01116691.

Pen device 100 of Figure 1 also includes a memory unit 48 coupled to the processor 32. In one embodiment, memory unit 48 is a removable memory unit embodied as a memory cartridge or a memory card. In another embodiment, memory unit 48 includes random access (volatile) memory (RAM) and read-only (non-volatile) memory (ROM) for storing information and instructions for processor 32.

In the embodiment of Figure 1, pen device 100 includes a writing element 52 situated at the same end of pen device 100 as the optical detector 42 and the optical emitter 44. Writing element 52 can be, for example, a pen, pencil, marker or the like, and may or may not be retractable. In certain applications, writing element 52 is not needed. In other applications, a user can use writing element 52 to make marks (e.g., graphical elements) on surface 70, including characters such as letters, words, numbers, mathematical symbols and the like. These marks can be scanned (imaged) and interpreted by pen device 100 according to their position on the surface 70. The position of the user-produced marks can be determined using a pattern of marks that are printed on surface 70; refer to the discussion of Figures 3 and 4, below. In one embodiment, the user-produced markings can be interpreted by pen device 100 using optical character recognition (OCR) techniques that recognize handwritten characters.

As mentioned above, surface 70 may be any surface suitable on which to write, such as, for example, a sheet of paper, although surfaces consisting of materials other than paper may be used. Also, surface 70 may or may not be flat. For example, surface 70 may be embodied as the surface of a globe. Furthermore, surface 70 may be smaller or larger than a conventional (e.g., 8.5x11 inch) page of paper.

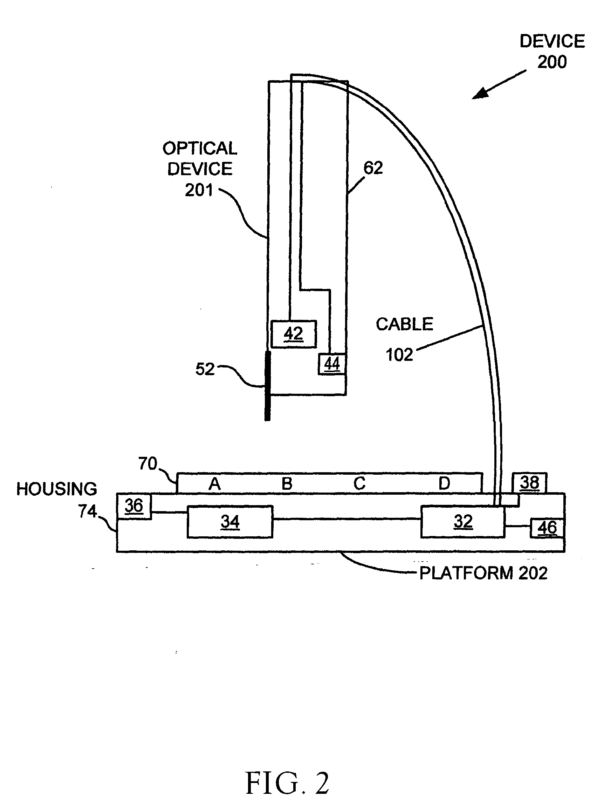

Figure 2 is a block diagram of another device 200 upon which embodiments of the present invention can be implemented. Device 200 includes processor 32, power source 34, audio output device 36, input buttons 38, memory unit 48, optical detector 42, optical emitter 44 and writing element 52, previously described herein. However, in the embodiment of Figure 2, optical detector 42, optical emitter 44 and writing element 52 are embodied as optical device 201 in housing 62, and processor 32, power source 34, audio output device 36, input buttons 38 and memory unit 48 are embodied as platform 202 in housing 74. In the present embodiment, optical device 201 is coupled to platform 202 by a cable 102; however, a wireless connection can be used instead. The elements illustrated by Figure 2 can be distributed between optical device 201 and platform 200 in combinations other than those described above.

Figure 3 shows a sheet of paper 15 provided with a pattern of marks according to one embodiment of the present invention. In the embodiment of Figure 3, sheet of paper 15 is provided with a coding pattern in the form of optically readable position code 17 that consists of a pattern of marks 18. The marks 18 in Figure 3 are greatly enlarged for the sake of clarity. In actuality, the marks 18 may not be easily discernible by the human visual system, and may appear as grayscale on sheet of paper 15. In one embodiment, the marks 18 are embodied as dots; however, the present invention is not so limited.

Figure 4 shows an enlarged portion 19 of the position code 17 of Figure 3. An optical device such as devices 100 and 200 (Figures 1 and 2) is positioned to record an image of a region of the position code 17. In one embodiment, the optical device fits the marks 18 to a reference system in the form of a raster with raster lines 21 that intersect at raster points 22. Each of the marks 18 is associated with a raster point 22. For example, mark 23 is associated with raster point 24. For the marks in an image/raster, the displacement of a mark from the raster point associated with the mark is determined. Using these displacements, the pattern in the image/raster is compared to patterns in the reference system. Each pattern in the reference system is associated with a particular location on the surface 70. Thus, by matching the pattern in the image/raster with a pattern in the reference system, the position of the pattern on the surface 70, and hence the position of the optical device relative to the surface 70, can be determined.

Additional descriptions regarding surface markings for encoding information and the reading/recording of such markings by electronic devices can be found in the following patents and patent applications that are assigned to Anoto and that are all herein incorporated by reference in their entirety: U.S. Patent No. 6,502,756, U.S. Application No. 10/179,966, filed on June 26, 2002, WO 01/95559, WO 01/71473, WO 01/75723, WO 01/26032, WO 01/75780, WO 01/01670, WO 01/75773, WO 01/71475, WO 10 00/73983, and WO 01/16691.

With reference back to Figure 1, four positions or regions on surface 70 are indicated by the letters A, B, C and D (these characters are not printed on surface 70, but are used herein to indicate positions on surface 70). There may be many such regions on the surface 70. Associated with each region on surface 70 is a unique pattern of marks. The regions on surface 70 may overlap because even if some marks are shared between overlapping regions, the pattern of marks in a region is still unique to that region.

In the example of Figure 1, using pen device 100 (specifically, using writing element 52), a user may create a character consisting, for example, of a circled letter "M" at position A on surface 70 (generally, the user may create the character at any position on surface 70). The user may create such a character in response to a prompt (e.g., an audible prompt) from pen device 100. When the user creates the character, pen device 100 records the pattern of markings that are uniquely present at the position where the character is created. The pen device 100 associates that pattern of markings with the character just created. When pen device 100 is subsequently positioned over the circled "M," pen device 100 recognizes the pattern of marks associated therewith and recognizes the position as being associated with a circled "M." In effect, pen device 100 recognizes the character using the pattern of markings at the position where the character is located, rather than by recognizing the character itself.

In one embodiment, the characters described above comprise "graphic elements" that are associated with one or more commands of the pen device 100. It should be noted that such graphic elements that are associated with, and are used to access the pen device 100 implemented functions comprising commands, are referred to as "graphic element icons" hereafter in order to distinguish from other written characters, marks, etc. that are not associated with accessing functions or applications of the pen device 100. In the example just described, a user can create (write) a graphic element icon that identifies a particular command, and can invoke that command repeatedly by simply positioning pen device 100 over the graphic element icon (e.g., the written character). In one embodiment, the writing instrument is positioned over the graphical character. In other words, the user does not have to write the character for a command each time the command is to be invoked by the pen device 100; instead, the user can write the graphic element icon for a command one time and invoke the command repeatedly using the same written graphic element icon. This attribute is referred to as "persistence" and is described in greater detail below. This is also true regarding graphical element icons that are not user written but pre-printed on the surface and are nevertheless selectable by the pen device 100.

In one embodiment, the graphic element icons can include a letter or number with a line circumscribing the letter or number. The line circumscribing the letter or number may be a circle, oval, square, polygon, etc. Such graphic elements appear to be like "buttons" that can be selected by the user, instead of ordinary letters and numbers. By creating a graphic element icon of this kind, the user can visually distinguish graphic element icons such as functional icons from ordinary letters and numbers, which may be treated as data by the pen device 100. Also, by creating graphic element icons of this kind, the pen device may also be able to better distinguish functional or menu item type graphic elements from non-functional or non-menu item type graphic elements. For instance, a user may create a graphic element icon that is the letter "M" which is enclosed by a circle to create an interactive "menu" graphic element icon.

The pen device 100 may be programmed to recognize an overlapping circle or square with the letter "M" in it as a functional graphic element as distinguished from the letter "M" in a word. The graphic element icon may also include a small "check mark" symbol adjacent thereto, within a certain distance (e.g.,1 inch, 1.5 inches, etc.). The checkmark will be associated with the graphic element icon. Computer code for recognizing such functional graphic elements and distinguishing them from other non-functional graphic elements can reside in the memory unit in the pen device. The processor can recognize the graphic element icons and can identify the locations of those graphic element icons so that the pen device 100 can perform various functions, operations, and the like associated therewith. In these embodiments, the memory unit may comprise computer code for correlating any graphic elements produced by the user with their locations on the surface. The pen device 100 recognizes a "down-touch" or "down-stroke" or being placed down upon the surface (e.g., when the user begins writing) and recognizes an "up-stroke" or being picked up from the surface (e.g., when the user finishes writing). Such down-strokes and up-strokes can be interpreted by the pen device 100 as, for example, indicators as to when certain functionality is invoked and what particular function/application is invoked (e.g., triggering OCR processing). Particularly, a down-stroke quickly followed by an up-stroke (e.g., a tap of the pen device on the surface) can be associated with a special action depending upon the application (e.g., selecting a graphic element icon, text string, etc.).

It should be noted that the generic term "graphic element" may include any suitable marking created by the user, and is distinguishable from a graphic element icon which refers to a functional graphic element that is used to access one or more functions of the device.

As mentioned above, it should be noted that graphic element icons can be created by the pen device 100 (e.g., drawn by the user) or can be pre-existing (e.g., a printed element on a sheet of paper). Example graphic elements include, but are not limited to symbols, indicia such as letters and/or numbers, characters, words, shapes, lines, etc. They can be regular or irregular in shape. User written/created graphic elements are typically created using the pen device 100. Additionally, graphic element icons usually, but not always, incorporate a circumscribing line (e.g., circle) around a character (e.g., the letter "M") to give them an added degree of distinctiveness to both the user and the pen device 100. For example, in one embodiment, an up-stroke after finishing a circle around the character can specifically indicate to the pen device 100 that the user has just created a graphic element icon.

Figure 5 shows a flowchart of the steps of a computer implement process 550 in accordance with one embodiment of the present invention. Process 550 depicts the basic operating steps of a user interface process as implemented by a device (e.g., pen device 100) in accordance with one embodiment of the present invention as it interprets user input in the form of graphic elements, writing, marks, etc. and provides the requested functionality to the user.

Process 550 begins in step 551, where the computer implemented functionality of the pen device 100 recognizes a created graphical elementicon (e.g., created by a user). Alternatively, the graphic element may be preprinted on the surface and its location known to the pen device 100. At step 551, if the user is writing the graphic element for the first time, the pen device 100 is using the optical sensor and the processor to perform OCR (optical character recognition) on the writing to identify the user written graphical element. Its unique location on the surface is then also recorded, in one embodiment. In step 552, once recognized, a function related to the graphical element icon is accessed. This function can be, for example, a menu function that can enunciate (e.g., audibly render) a predetermined list of functions (e.g., menu choices or sub-menu options) for subsequent activation by the user. In step 553, an audio output in accordance with the function is provided. This audio output can be, for example, the enunciation of what particular choice the user is at within the list of choices. In step 554, the function is persistently associated with the graphical element icon, enabling a subsequent access of the function (e.g., at some later time) by a subsequent actuation (e.g., tapping with the pen device 100) of the graphical element icon. For example, in the case of a menu function, the listed menu choices can be subsequently accessed by the user at some later time by simply actuating the menu graphic element icon (e.g., tapping it).

It should be noted that the output of the pen device 100 can be visual output (e.g., via a display, indicator lights, etc.) in addition to, or instead of, audio output. The visual output and/or audio output can come directly from the pen device 100, or can be from another device (e.g., personal computer, speaker, LCD display, etc.) communicatively coupled to the pen device 100.

It is appreciated that a plurality of different graphic elements may exist on the surface and anytime, and the selection thereof may provide various functions to be executed by the pen device 100, for example, to invoked applications, invoke sub-menu options, etc.

In this manner, embodiments of the present invention implement a user interface means for navigating the functionality of a computer system, particularly the pen based computer system comprising, for example, the pen device 100. The user interface as implemented by the graphical element icons provides the method of interacting with a number of software applications that execute within the pen device 100. As described above, output from the pen device 100 may include audio output, and thus, the user interface means enables the user to carry on a "dialog" with the applications and functionality of the pen device 100. In other words, the user interface enables the user to create mutually recognized items such as graphic element icons that allow the user and the pen device 100 to interact with one another. As described above, the mutually recognized items are typically symbols or marks or icons that the user draws on a surface, typically a sheet of paper.

Different graphic element icons have different meaning and different manners of interaction with the user. Generally, for a given graphic element icon, the manner of interaction will call up different computer implemented functionality of the pen device. For illustration purposes, in the case of the menu example above, the menu functionality allows the user to iterate through a list of functions that are related to the graphic element (e.g., the number of taps on the menu graphic element icon iterates through a list of functions). Audio from the pen device can enunciate the function or mode as the taps are done. One of the enunciated functions/modes can then be selected by the user through some further interaction (e.g., drawing or selecting a previously drawn checkmark graphic element associated with the graphic element icon). Once selected, the functionality and options and further sub-menus of the particular selected function can then be accessed by the user. Alternatively, if one of the audibly rendered sub-options is itself a menu graphical icon, it can be selected by the user drawing its representation on the surface and selecting it.

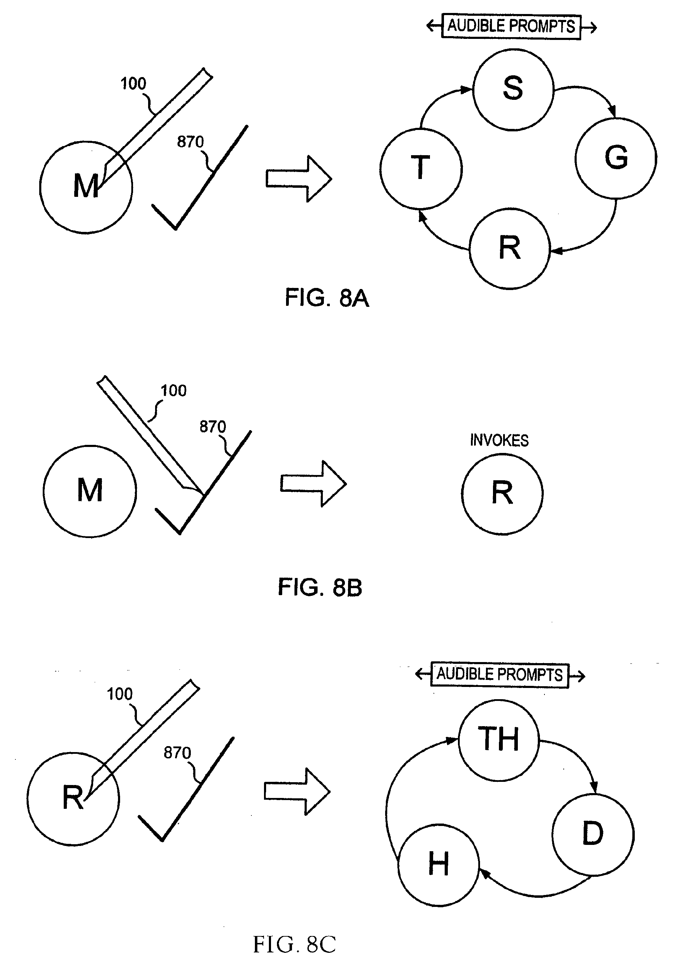

Figure 6 shows a flowchart of the computer implemented steps of a process 650 in accordance with one embodiment of the present invention. Process 650 depicts the basic operating steps of a user interface process for accessing (e.g., navigating through) a number of nested, hierarchical functions of an interactive device (e.g., pen device 100) in accordance with one embodiment of the present invention. Process 650 is described with reference to Figures 8A, 8B, and 8C.

Process 650 begins in step 651, where the computer implemented functionality of the pen device 100 recognizes a created graphic element icon, shown in Figure 8A as a menu icon "M". Like step 551, the graphic element icon may be written by the user or preprinted on the surface. In one case, the graphic element icon can provide a list of choices of further graphic element icons (e.g., hierarchical arrangement) that are associated their with and which themselves may provide further choices. In step 652, and as shown in Figure 8A, once recognized, a first hierarchical menu of functions related to the graphic element icon is accessed. In this example, once recognized, the menu icon "M" of step 651 causes a list of sub-options (e.g., system "S", games "G", reference "R", and tools "T") to be audibly rendered (e.g., via audible prompts), one option at a time, as shown in Figure 8A. The options are rendered in response to successive selections of the menu icon of step 651 by the pen device (e.g., pen device 100).

In step 653, and as illustrated in Figure 8B, one of the enunciated functions, in this example, the reference graphic element icon "R", is selected through an appropriate number of actuations of the menu graphic element icon (e.g., taps) and an actuation the associated checkmark icon 870. In step 654, the activated function may prompt the creation of a second graphic element icon for a second hierarchical menu of functions. The second graphic element icon, the reference icon "R" in this example, may then be drawn on the surface by the user. The selection thereof, as shown in Figure 8C, will cause a second listing of submenu items to be audibly rendered (e.g., via audible prompts) in the manner described above (e.g., Thesaurus "TH", dictionary "D", and help "H"). Subsequently in step 655, one of the enunciated functions of the second graphic element icon is activated through an appropriate number of actuations to select one of the second hierarchical level functions.

In this manner, one menu can invoke a number of sub-menus which themselves have even further sub-menus. Thus, different levels of graphic element icons can be hierarchically arranged. Generally, top-level graphic element icons which present menus of functions are referred to as group graphic element icons. Application graphic element icons are second-level graphic element icons that generally present menus of configuration options or application settings for a given application. For example, application graphic element icons can be considered as a special case of a group graphic element icon. Generally, an application graphic element icon has a specialized application related default behavior associated with it.

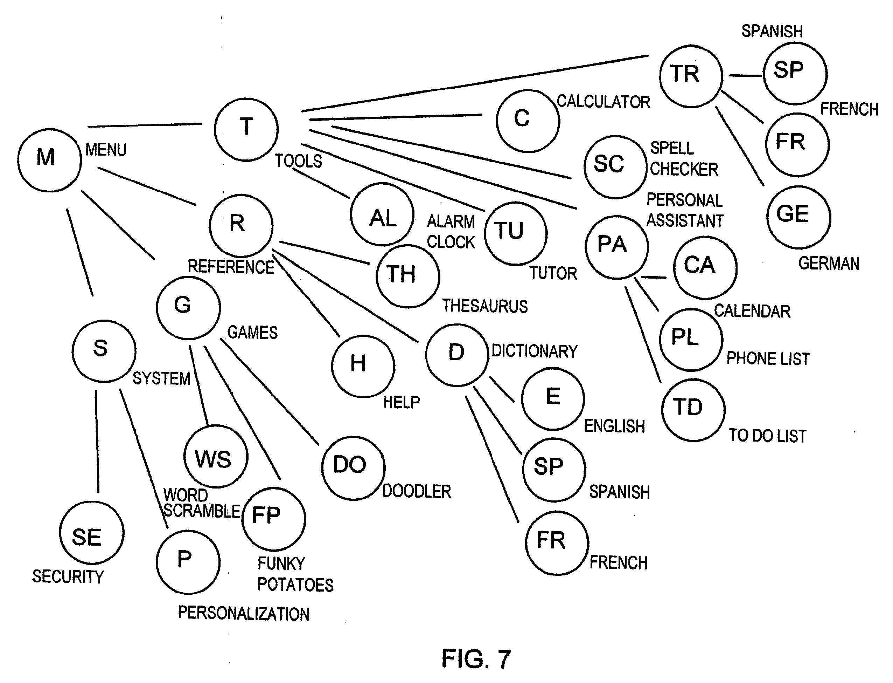

In this manner, the user may then select a menu item from the list of menu items. The menu items may include directory names, subdirectory names, application names, or names of specific data sets. Examples of directory or subdirectory names include, but are not limited to, "tools" (e.g., for interactive useful functions applicable under many different circumstances), "reference" (e.g., for reference materials such as dictionaries), "games" (e.g., for different games), etc. Examples of specific application (or subdirectory) names include "calculator", "spell checker", and "translator". Specific examples of data sets may include a set of foreign words and their definitions, a phone list, a calendar, a to-do list, etc. Additional examples of menu items are shown in Figure 7.

Specific audio instructions can be provided for the various menu items. For instance, after the user selects the "calculator" menu item, the pen device may instruct the user to draw the numbers 0-9, and the operators ±, -'x, /, and = on the sheet of paper and then select the numbers to perform a math calculation. In another example, after the user selects the "translator" menu item, the pen device can instruct the user to write the name of a second language and circle it. After the user does this, the pen device can further instruct the user to write down a word in English and then select the circled second language to hear the written word translated into the second language. After doing so, the audio output device in the pen device may recite the word in the second language.

Figure 7 shows a menu item tree directory according to an embodiment of the present invention including the graphical element icon representation of each option. The menu item tree directory can embody an audio menu starting from the menu graphic element icon. Starting from the top of Figure 7, a first audio subdirectory would be a tools T subdirectory. Under the tools T subdirectory, there could be a translator TR subdirectory, a calculator C subdirectory, a spell checker SC subdirectory, a personal assistant PA subdirectory, an alarm clock AL subdirectory, and a tutor TU function. Under the translator TR subdirectory, there would be Spanish SP, French FR, and German GE translator functions. Under the personal assistant PA subdirectory, there would be calendar C, phone list FL, and to do list TD functions or subdirectories. Under the reference R subdirectory, there could be thesaurus TH function, a dictionary D subdirectory, and a help H function. Under the dictionary D subdirectory, there can be an English E function, a Spanish SF function, and a French FR function. Under the games G subdirectory, there can be games such as word scramble WS, funky potatoes FP, and doodler DO. Other games could also be present in other embodiments of the invention. Under the system S subdirectory, there can be a security SE function, and a personalization P function.

Details pertaining to some of the above directories, subdirectories, and functions are provided below. As illustrated by the menu item tree-directory, a user may proceed or navigate down any desired path by listening to recitations of the various menu items and then selecting the menu item desired. The subsequent selection of the desired menu item may occur in any suitable manner. For example, in some embodiments, a user can cause the pen device to scroll through the audio menu by "down touching" (e.g., down-stroke) on a created graphic element. The "down touching" may be recognized by the electronics in the pen device as an "actuation" by using any suitable mechanism. For instance, the pen device may be programmed to recognize the image change associated with the downward movement of it towards the selected graphic clement.

In another example, a pressure sensitive switch may be provided in the pen device so that when the end of the pen device applies pressure to the paper, the pressure switch activates. This informs the pen device to scroll through the audio menu. For instance, after selecting the circled letter "M" with the pen device (to thereby cause the pressure switch in the pen device to activate), the audio output device in the pen device may recite "tools" and nothing more. The user may select the circled letter "M" a second time to cause the audio output device to recite the menu item "reference". This can be repeated as often as desired to scroll through the audio menu. To select a particular menu item, the user can create a distinctive mark on the paper or provide a specific gesture with the scanning apparatus. For instance, the user may draw a "checkmark" (or other graphic element) next to the circled letter "M" after hearing the word "tools" to select the subdirectory "tools". Using a method such as this, a user may navigate towards the intended directory, subdirectory, or function in the menu item tree. The creation of a different graphic element or a different gesture may be used to cause the pen device to scroll upward. Alternatively, buttons or other actuators may be provided in the pen device to scroll through the menu. Once "tools" is selected, it will function as described above, but with respect to its subdirectory menu.

In other embodiments, after creating the menu graphic element icon (e.g., letter "M" with a circle), the user may select the menu graphic element icon. Software in the scanning apparatus recognizes the circled letter as being the menu symbol and causes the scanning apparatus to recite the menu items "tools", "reference", "games", and "system" sequentially and at spaced timing intervals, without down touching by the user. Audio instructions can be provided to the user. For example, the pen device may say "To select the 'tools' directory, write the letter 'T' and circle it," To select the menu item, the user may create the letter "T" and circle it. This indicates to the pen device that the user has selected the subdirectory "tools". Then, the pen device can recite the menu items under the "tools" directory for the user. Thus, it is possible to proceed directly to a particular directory, subdirectory, or function in the menu item tree by creating a graphic element representing that directory, subdirectory, or function on a sheet and interacting there with. Alternatively, if the menu item already resides on the surface, the user can anytime interact with it to select its functions.

It should be noted that the order of items within the directories, subdirectories, option menus, etc. of the graphic element icons depicted in Figure 7 can be changed by the user. For example, the user can access a certain application and use that application to change the order in which the items of one or more directories, subdirectories, etc., are audibly rendered. Similarly, the user can change the specific audio output associated with one or more items within a given directory/subdirectory etc. for sample, the user can record her own voice for an item, use a prerecorded song (e.g., MP3, etc.), or the like, and user according as the item's audibly rendered output. Additionally, it should be noted that additional items for one or more directories, subdirectories, etc., can be added through, for example, software/or firmware updates provided to the pen device (e.g., uploading new software based functionality).

It should be noted that a respective state of multiple instances of a graphic element icon (e.g., multiple menu icons) can be persistently associated with each specific instance. For example, in a case where two or more graphic element icons exist on a common surface (e.g., created by the user, preprinted, or the like) their state, or their particular location within their directory of options can be independently retained, or remembered, for each icon. For example, if a first menu icon is currently on option three (e.g., "games"), and a second menu icon is currently on option one (e.g., "tools"), the user can go off and perform other tasks using other applications (e.g., calculator, dictionary, etc.) and come back at some later time to either the first or second menu icon and they will correctly retain their last state (e.g., "games" for the first and "tools" for the second menu icon).

Similarly, it should be noted that a respective state of multiple instances of a graphic element icon (e.g., multiple menu icons) can be coordinated among the multiple instances and persistently associated with each specific instance. With coordinated state, where two or more graphic element icons exist on a common surface (e.g., created by the user, preprinted, or the like) their state can be remembered for each icon, but that state can be coordinated such that the options span across each instance. For example, if a first menu icon is currently on option two (e.g., "system"), a second menu icon will have its state coordinated such that it will be on option three (e.g., "tools"). The user can perform other intervening tasks and come back at some later time to either the first or second menu icon and they will correctly retain their coordinated state (e.g., "system" for the first and "tools" for the second).

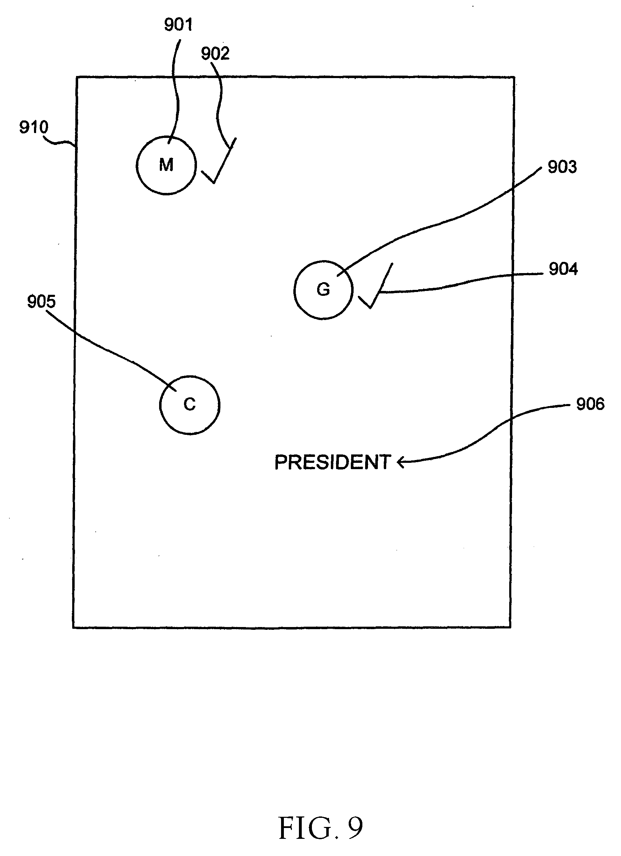

Figure 9 shows a surface 910 (e.g., a sheet of paper) having a number of graphic element icons written thereon in accordance with one embodiment of the present invention. Figure 9 shows examples of group graphic element icons (e.g., the menu icon "M" and the games icon "G") and an application icon (e.g., the calculator icon "C"). The graphic element icons can be written on the sheet paper 910 by the user or can be preprinted. As described above, group graphic element icons generally audibly render a list options. For example, repeatedly tapping at location 901 with the pen device 100 proceeds through the options of the menu directory (e.g., system, games, reference, and tools), as described in the discussion Figure 7. For example, tapping twice on the menu icon will cause the pen device 100 to audibly render "system" and then audibly render "games" indicating the selection of the games subdirectory. The game subdirectory can then be activated by touching location 902 (e.g., the checkmark) and the activation can be confirmed to the user through an audio tone.

Subsequently, the pen device 100 audibly prompts the user to create (e.g. draw) a games graphic element icon as shown in Figure 9. Repeatedly tapping the games icon at location 903 with the pen device 100 then causes the pen device 100 to proceed through the options of the games subdirectory (e.g., word scramble, funky potatoes, and doodler), as described in the discussion of Figure 7. A selected one of the game subdirectory items can then be selected through a tap at location 904 (e.g., the checkmark associated with the games), or alternatively, drawing the checkmark if it is not already there.

Referring still to Figure 9, a touch at the calculator icon "C" launches the calculator application. In this manner, the calculator icon does not render a list of menu items or subdirectory options, but rather directly launches an application itself, in this case the calculator application. Once the calculator application is invoked, the pen device 100 confirms the activation (e.g., by rendering an audio tone) and audibly prompts the user through a series of actions to prepare the calculator for use (e.g., by instructing the user to draw the numbers 0-9, and the operators ±, -' x, /, and = on the surface and then select the numbers to perform a math calculation).

Figure 9 also shows a user written word 906 (e.g., text string) created using a "prompt and believe" function of the pen device 100. In accordance with embodiments of the present invention, it should be noted that some words, text strings, marks, symbols, or other graphic elements, need not be processed at all using OCR. For example, the particular word, graphic element, etc., can be created by the user in response to an audible prompt from the pen device 100, wherein the pen device prompts the user to write the particular word (e.g., "president") and subsequently stores the location of the written word with the association (e.g., from the prompt). The subsequent selection of the created word is recognized by location in the manner described above. For example, pen device 100 can instruct the user to write the word "president" 906. In response to the prompt, the user writes the word "president" and the pen device 100 will treat, or in other words believe, upon a subsequent selection of the word that what the user wrote in response to the prompt was in fact the word "president." In other words, the pen device 100 associates the label "president" with whatever the user wrote in response to the prompt. Depending upon the application, the user can be prompted to underline the word, put a box around the word, or otherwise and some distinguishing mark/graphic element.

When the user is done writing the prompted word, the pen device 100 recognizes the fact that the user is finished by, for example, recognizing the inactivity (e.g., the user is no longer writing) as a data entry termination event. In this manner, a "timeout" mechanism can be used to recognize the end of data entry. Another termination event could be a case where the word is underlined or boxed as described above. Additional examples of termination events are described in the commonly assigned United States Patent Application "TERMINATION EVENTS", by Marggraff et al., filed on January 12, 2005, Attorney Docket No. LEAP-P0320, and is incorporated herein in its entirety.

In this manner, the prompt-and-believe feature of embodiments of the present invention enables the creation of graphic elements having meanings that are mutually understood between the user and the pen device 100. Importantly, it should be understood that there is no OCR processing being done on the word president. Graphic elements created using the "prompt-and-believe" function can be associated with labels for other applications, options, menus, functions etc., whereby selection of the prompt-and-believe graphic element (e.g. by tapping) can invoke any of the above. Reducing the requirement for OCR processing lowers the computational demands on the pen device 100 and thus improves the responsiveness of the user interface.

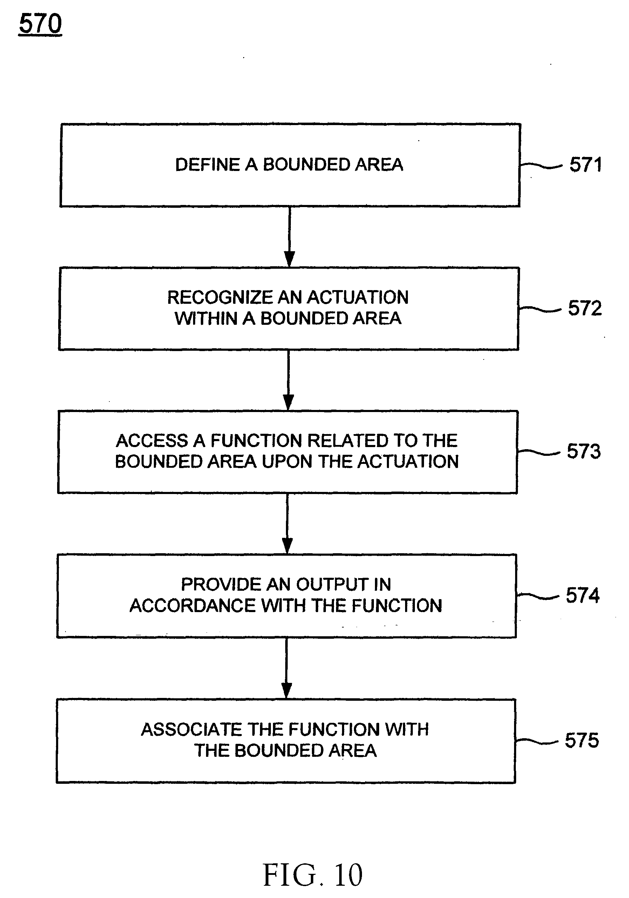

Figure 10 shows a flowchart of the steps of a process 570 in accordance with one embodiment of the present invention. Process 570 depicts the basic operating steps of a bounded area user interface process for accessing functions and applications of an interactive device (e.g., pen device 100) in accordance with one embodiment of the present invention.

Process 570 begins in step 571, where a bounded area is defined. In step 572, the computer implemented functionality of the pen device 100 recognizes an actuation within the bounded area of a surface. The actuation can be a touch of the pen device within the bounded area (e.g., placing the tip of the pen down), a stroke or mark of the pen device within the bounded area (e.g., drawing a character or a mark), or the like. As referred to herein, the bounded area refers to an area of the surface that is enclosed by a boundary. One example of the bounded area would be a user created box drawn on the surface of a paper. The area of the paper within the box comprises the bounded area. At step 571, the bounded area may be drawn by the user in response to an audible command or prompt by the pen device to do so. In other words, the first action understood by user after selection of an application may be for the user to draw a box.
After the box or other enclosure is drawn, the pen device then associates the box with the application or function.

In step 573, when an actuation is detected within the bounded area, a function or application program related to the bounded area is automatically invoked. The bounded area is typically associated with a specific function that influences the particular functionality (or application) the pen device invokes when it recognizes an actuation within the bounded area. One example of a particular function would be the calculator function, where user input into the calculator bounded area is preferentially recognized as numbers as opposed to letters in order to improve the recognition process. In this example, any user writings within the bounded area representing the calculator automatically invokes the calculator functions which are then applied to the writings. The same is true if the writings have already been made but the user merely selects them with the writing tool (e.g., pen device 100).

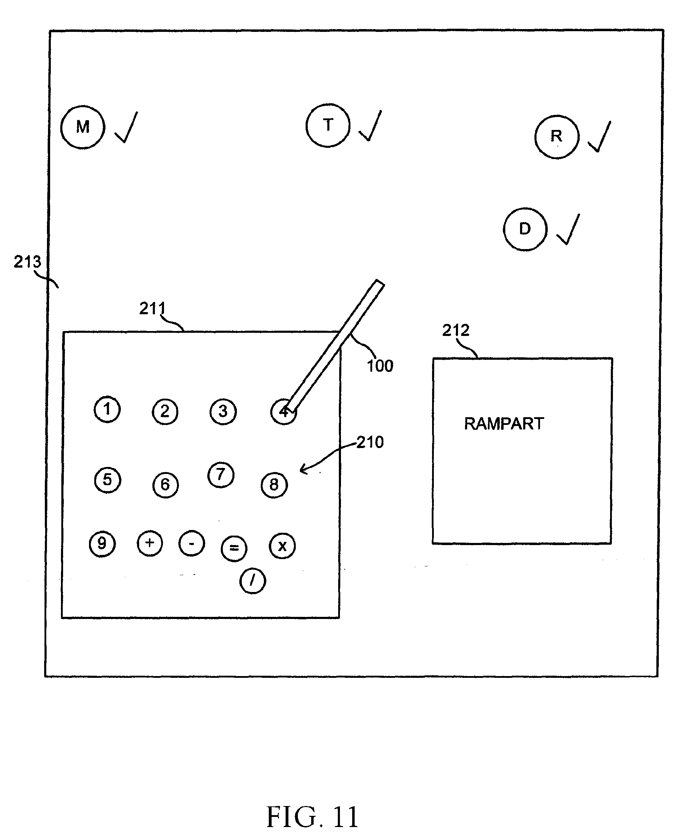

In step 574, an output is provided in accordance with the function that is particular to the bounded area. For example, continuing the calculator example described above, the output would be an audio output describing the result of a mathematical operation entered by the user. Subsequently, in step 575, the particular function is associated with the bounded area such that persistence is achieved. As described above, this persistence attribute enables the user to perform other intervening tasks and perform other intervening actions and at some later point in time return to the bounded area and have it function in its intended manner (e.g., the bounded area still behaves as a calculator). The calculator example of the bounded area is further described in the discussion of Figure 11.

Figure 11 shows a calculator bounded area application in accordance with one embodiment of the present invention. Figure 11 illustrates the manner in which a user can create a paper calculator from a blank piece of paper. In this example, after the user has selected the "calculator" application as described above, the pen device prompts the user to draw a square bounded area 211 and prompts the user to write down the numbers 0-9 and the operators +, - , x, /, and = within this bounded area. A user creates the graphic elements 210 including numbers with circles around them, and mathematical operators for operations such as addition, subtraction, multiplication, division, and equals. In other embodiments, circles need not be provided around the numbers shown in Figure 11. The pen device 100 recognizes the positions of the created graphic elements and recognizes the actual graphic elements created.

A user can then select at least two graphic elements to receive an audio output related to the selection of those at least two graphic elements. For example, the user may select sequence of graphic elements "4" "±" "7" "=" to hear the pen device 100 recite "eleven." The paper calculator is persistent, as described above, and thus can be re-used at a later time, since the pen device has stored the locations of the graphic elements in its memory unit. This embodiment can be useful in school where a student does not have a physical calculator available.

It should be noted that the bounded area may be pre-printed or drawn by the user. For example the paper calculator can be user created in response to prompts in the manner described above, or the paper calculator can be preprinted on the sheet paper 213. In either case, when user writes in this bounded area 211, only the calculator application is active and the pen device looks only to numbers, not letters, in order to streamline the recognition process.

Additionally, it should be noted that the user does not need to select a graphical element icon to activate the application or function assigned to the bounded area. Depending upon the manner in which the bounded area was created, the function associated with the bounded area (e.g., calculator) persists and is automatically invoked upon a subsequent actuation. It should also be noted that the user can define multiple bounded areas, each area assigned to a different application. For example, referring still to Figure 11, a user can define the calculator bounded area 211 in the manner described above, and also define a dictionary bounded area 212 on the same sheet of paper 213 (e.g., from the reference submenu "R" and the tools submenu "T"). The dictionary bounded area 212 functions by audibly rendering a definition of a text string (e.g., the word "rampart") entered within the bounded area 212. Thus, text entered within the bounded area 212 is associated with the dictionary function and is recognized as a word (e.g., letters), while text entered within the bounded area 211 is associated with the calculator function and is recognized as numbers (e.g., equations, etc.). Alternatively, the user can define multiple bounded areas where two or more of them are instances of the same function.

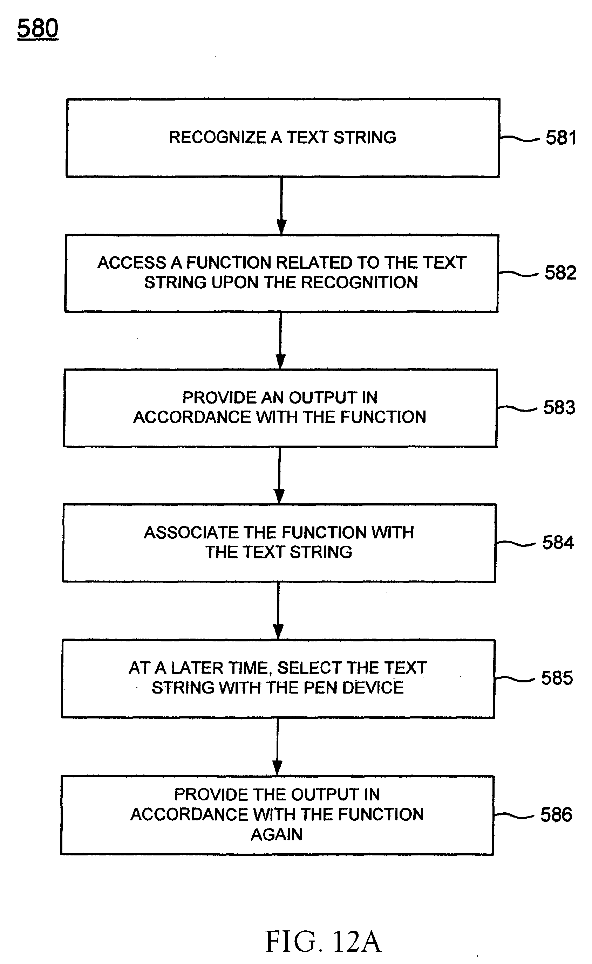

Figure 12A shows a flowchart of the steps of a computer implemented process 580 in accordance with one embodiment of the present invention. Process 580 depicts the basic operating steps of a text string recognition user interface process for accessing functions of an pen device (e.g., device 100) in accordance with one embodiment of the present invention. This process 580 describes a mode of operation of the pen based computer system called "active text."

Process 580 begins in step 581, where the computer implemented functionality of the device 100 recognizes a text string (e.g., word) that may be user written with the pen device. In step 582, upon the recognition, a function that is currently selected or related to the text string is accessed. In step 583, an output is provided in accordance with the function and in accordance with the text string. Exemplary functions can be, for example, translation functions, wherein the word is translated from one language (e.g., English) into a different language, dictionary functions, wherein a definition is provided for the word, thesaurus functions, and the like. Subsequently, in step 584 the particular function is associated with the text string such that persistence is achieved. As described above, this persistence attribute enables the user to perform other intervening tasks and perform other intervening actions and at some later point in time return to the text string and have it function in its intended manner (e.g., the text string still behaves as a Thesaurus, dictionary, translator, etc.) by the mere selection of the text string by the pen device. In step 585, at some later time, the user selects the text string with the pen device (e.g., by touching on the text string). Subsequently, in step 586, in response to the selection, the pen device automatically selects the function associated with the text string and provides the output again (e.g., provides the translated output, provides the definition, etc.).

In this manner, the user is able to write text (e.g., a word), and the pen device remembers this word and its location on the paper. The text thus becomes an active region on the paper capable of invoking different functions (e.g., like a graphical element icon).

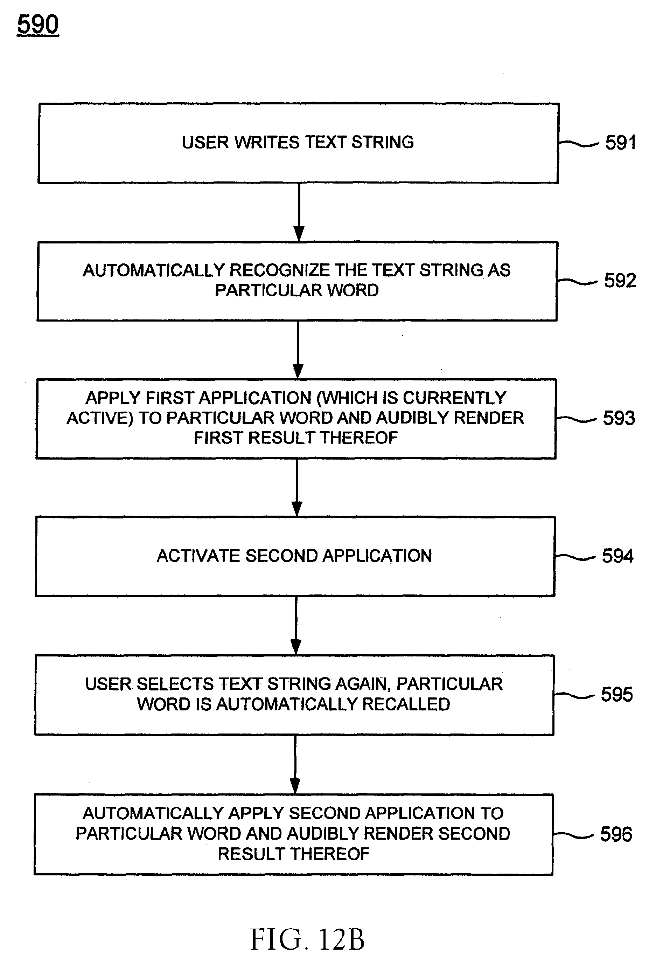

Figure 12B shows a flowchart of the steps of a computer implemented process 590 in accordance with one embodiment of the present invention. In the process 590 embodiment, the function performed on the text depends only on the currently selected application and the text string is then treated as data only. This is described by process 590.

Process 590 begins in step 591, where the user writes a text string. In step 592, the pen device automatically recognizes the text string as a particular word. In step 593, a first application (which is currently active) is applied to the particular word and the result of the application (operating on the particular word) is audibly rendered by the pen device. For example, when the user selects the text, special application specific functions can be initiated, wherein different functions are invoked depending on the selected application. In step 594, a second application is activated. In step 595, the user selects the text string again and the particular word is automatically recalled. And in step 596, a second application is automatically applied to the particular word and the result of the second application (operating on the particular word) is audibly rendered.

In this embodiment, it should be noted that one or more graphic element icons can be used to change the function associated with a text string (e.g., word). For example, the dictionary application, the translation application, or the like can be selected through their respective graphic element icons. Similarly, a plurality of graphic element icons can invoke a corresponding plurality of different functions from the same word (e.g., to get a definition, to get a translation, etc.).

Thus, for example, process 590 enables an interface method whereby, with the translation application active (e.g., by touching the translation graphic item icon), the selection of the word invokes a translation of the particular word into another language. But when the dictionary application is active (e.g., by touching the dictionary graphic item icon), when the user selects the particular word, the pen device provides a definition for the particular word. In this manner, the user has associated multiple applications with the particular word. In contrast, with process 580, with the translation application active, the selection of the word invokes a translation of the particular word into another language. The user may then go on to perform other intervening tasks (e.g., calculator application, games, etc.). And then at some later time, since the one application remains associated with the text string, the user merely selects the text string again (e.g., by touching it) when the user wants to hear the translation of the particular word again (e.g., the pen device audibly rendering the translation of the particular word). The translation is automatically rendered since only the single application has been associated with the particular word.

Importantly, in the above examples, it should be noted that an OCR (optical character recognition) process needs to be performed on a mark, single character, or a text string (e.g., a word) only once, as it is first written by the user (e.g., "rampart" shown in Figure 11). As described above, the pen device 100 includes functionality whereby the location of the graphic elements on the surface 213 can be determined (e.g., by the pen device 100 reading data encoded on the surface 213). This enables the pen device 100 to remember the location of the particular word. The pen device 100 can thus identify subsequent selections of the particular word by recognizing the same location of the particular word on the surface 213 (e.g., when the user touches the pen device 100 onto the particular word at some later time). Upon subsequent selections of the word by the user, the results of the earlier performed OCR process are recalled, and these results are used by, for example, an active application (e.g., dictionary). Thus, the ability to store results of an OCR process (e.g., on words, characters, numbers, etc.), and to subsequently recall those results for use with one or more applications at a later time, greatly improves the responsiveness and the performance of the user interface implemented by embodiments of the present invention. Resource intensive OCR processing need only be performed once by the computer system resources of the pen device 100.

It should be noted that a bounded area can be used to influence or change the function associated with a text string (e.g., word). For example, a bounded area corresponding to the dictionary application might always supply the definition of the word when the word is written (or selected if already written) within the bounded area. Similarly, the text string can be used to change or influence the function associated with the bounded area.

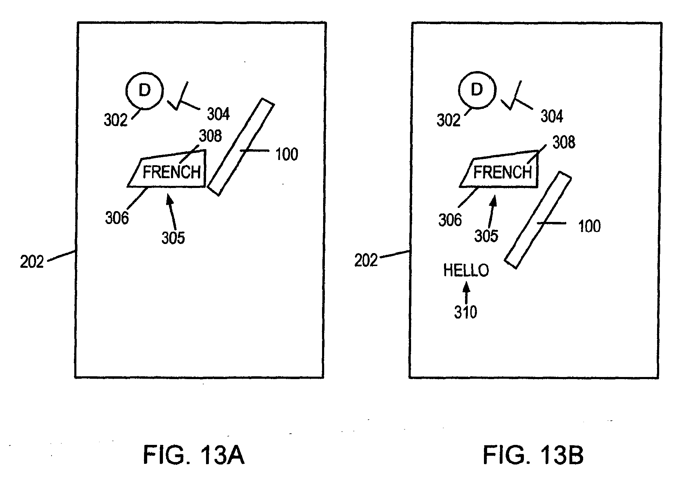

Figures 13A and 13B show an example of a text string recognition application in accordance with one embodiment of the present invention. As depicted in Figure 13A and Figure 13B, a user can write down the graphic element 302 D enclosed by a circle. After the pen device 100 recites the word "dictionary", the user can create a checkmark 304 with the pen device 100 to indicate that the dictionary function is selected. After creating the graphic element 302, the pen device 100 may further prompt the user to create another graphic element 305 including the word "French" 308 enclosed by a line 306 (e.g., a bounded area). The pen device 100 may then prompt the user to write a word and the user may write the text string "Hello" 310. The user may then select the word "Hello" and then the graphic element 305 to hear the word "Bon jour" recited by the device 100.

As illustrated by the foregoing example, the at least two graphic elements created by the user may comprise a first graphic element (e.g., the text string) comprising a name of a language and a second graphic element comprising a word that is in a language that is different than the language. The user may select the word and then select the name of the language, and may then listen to at least one audio output including listening to a synthesized voice say the word in the language. The language can be a non-English language such as Spanish, French, German, Chinese, Japanese, etc., and the word can be in English. English-to-foreign language dictionaries may be stored as computer code in the memory unit of the pen device.

The foregoing descriptions of specific embodiments of the present invention have been presented for purposes of illustration and description. They are not intended to be exhaustive or to limit the invention to the precise forms disclosed, and obviously many modifications and variations are possible in light of the above teaching. The embodiments were chosen and described in order to best explain the principles of the invention and its practical application, to thereby enable others skilled in the art to best utilize the invention and various embodiments with various modifications as are suited to the particular use contemplated. It is intended that the scope of the invention be defined by the claims appended hereto and their equivalents.

## Claims

1. A method of interpreting user commands, comprising:
recognizing an actuation of a pen device within a bounded area of a writable surface;
accessing a function of the pen device related to the bounded area upon the actuation;
providing an output in accordance with the function; and
associating the function with the bounded area.

2. The method of Claim 1, wherein the output comprises an audio output related to the function.

3. The method of Claim 1, further comprising:
enabling a subsequent access of the function by storing the association of the function with the bounded area.

4. The method of Claim 3, wherein the storing of the association of the function with the bounded area implements a persistent availability of the function for a predetermined amount of time via interaction of the pen device with the bounded area.

5. The method of Claim 1, wherein the bounded area is user drawn with the pen device on the surface.

6. The method of Claim 5, wherein the surface comprises a sheet of paper.

7. The method of Claim 1, further comprising:
determining the function related to the bounded area by the first selecting one of a plurality of options of a graphic element icon on the surface.

8. The method of Claim 7, further comprising:
prompting the creation of the bounded area in accordance with the selection of the one of the plurality of options.

9. The method of Claim 1, wherein the bounded area is a preprinted bounded area and the function related to the bounded area is predetermined.

10. The method of Claim 1, further comprising:
wherein the actuation comprises user written text within the bounded area and further comprising automatically recognizing the user written text as a particular word.

11. The method of Claim 10, wherein said providing an output comprises:
automatically applying the particular word to the function related to the bounded area to generate a result thereof.

12. The method of claim 11 wherein the result is audibly rendered.

13. The method of Claim 1, further comprising:
enabling a subsequent access of a plurality of functions for a corresponding plurality of bounded areas by respectively storing the association of the plurality of functions with the plurality of bounded areas.

14. A method of interpreting user commands, comprising:
recognizing a text string on a writable surface;
accessing a function of a pen device related to the text string upon the recognition;
providing an output in accordance with the function; and
associating the function with the text string.

15. The method of Claim 14, wherein the output comprises an audio output related to the function.

16. The method of Claim 14, further comprising:
enabling a subsequent access of the function by storing the association of the function with the text string.

17. The method of Claim 16, wherein the storing of the association of the function with the text string implements a persistent availability of the function for a predetermined amount of time via interaction of the text string with the pen device.

18. The method of Claim 14, wherein the text string is user drawn with the pen device on the writing surface.

19. The method of Claim 18, wherein the writing surface comprises a sheet of paper.

20. The method of Claim 14, further comprising:
determining the function related to the text string by selecting one of a plurality of options of a graphic element icon.

21. The method of Claim 19, further comprising:
prompting the creation of the text string in accordance with the selection of the one of the plurality of options.

22. The method of Claim 14, wherein the text string is recognized within a preprinted bounded area having a function that is related to the bounded area and is predetermined.

23. The method of Claim 14, further comprising:
selecting the function related to the text string input within the bounded area in accordance with the function related to the bounded area.

24. The method of Claim 14, further comprising:
selecting one of a plurality of functions for use with the text string by selecting one of a plurality of options of a graphic element icon.

25. A method of Claim 14 further comprising:
recognizing selection of said text string by said pen device;
accessing said function related to said text string; and
providing said output in accordance with said function.

26. A method of interpreting user commands comprising:
recognizing a user written text string as a particular word wherein said user written text string is written on a writable surface using a pen device; applying said particular word to a first application to generate a first result thereof, wherein said first application is one of a plurality of applications that are operable to be executed on said pen device; and
audibly rendering said result using said pen device.

27. A method as described in Claim 26 further comprising:
recognizing that a second application is selected in response to said pen device interacting with an image on said writable surface;
recognizing that said user written text string is selected in response to said pen device interacting therewith;
automatically applying said particular word to said second application to generate a second result thereof; and
audibly rendering said second result using said pen device.

28. A device comprising:
an optical sensor for detecting images from a writable surface;
a processor coupled to the sensor; and
a memory coupled to said processor, the memory storing instructions that when executed cause the processor to implement a method of interpreting user commands, comprising:
recognizing a created graphic element icon on the surface;
accessing a function related to the graphic element icon;
recognizing a user written text string as a particular word;
providing an output in accordance with the particular word and in accordance with the function; and
associating the function with the user written text string.

29. The device of Claim 28, wherein the output comprises an audio output related to the function and related to the user written text string.

30. The device of Claim 28, further comprising:
enabling a subsequent access of the function by storing the association of the function with the user written text string.

31. The device of Claim 30, wherein the storing of the association of the function with the user written text string implements a persistent availability of the function for a predetermined amount of time via interaction with the text string using the pen device.

32. The device of Claim 28, wherein the user written text string is created with the pen device on the surface.

33. The device of Claim 32, wherein the surface comprises a sheet of paper.

34. The device of Claim 28, further comprising:
determining the function related to the text string by selecting one of a plurality of options of the graphic element icon.

35. The device of Claim 28, further comprising:
prompting the creation of the text string in accordance with the function.

36. The device of Claim 28, further comprising:
prompting the creation of a bounded area in accordance with the function; and
prompting the creation of the text string within the bounded area to implement the function.

37. The device of Claim 36, further comprising:
selecting the function related to the text string input within the bounded area in accordance with the function related to the bounded area.

38. The device of Claim 28, further comprising:
selecting one of a plurality of functions for use with the text string by selecting one of a plurality of options of a graphic element icon.

39. A pen device comprising:
an optical sensor for sensing images on a writable surface;
a writing instrument;
a processor coupled to a bus;
a speaker;
a memory coupled to said bus and comprising instructions that when executed implement a method of interpreting user commands comprising:
recognizing a user written text string as a particular word wherein said user written text string is written on said writable surface using said writing instrument;
applying said particular word to a first application to generate a first result thereof, wherein said first application is one of a plurality of applications that are operable to be executed on said pen device; and
audibly rendering said result using said speaker.

40. A device as described in Claim 39 wherein said method further comprises:
recognizing that a second application is selected in response to said pen device interacting with an image on said writable surface;
recognizing that said user written text string is selected in response to said pen device interacting therewith;
automatically applying said particular word to said second application to generate a second result thereof; and
audibly rendering said second result using said speaker.

41. A pen device comprising:
an optical sensor for sensing images on a writable surface;
a writing instrument;
a processor coupled to a bus;
a speaker;
a memory coupled to said bus and comprising instructions that when executed implement a method of interpreting user commands comprising:
defining a first bounded area of said writable surface to a first application;
defining a second bounded area of said writable surface to a second application, wherein said first and second applications are operable to be executed on said pen device;
in response to a first user-written data in said first bounded area, recognizing said first user-written data as a first expression and automatically applying said first expression to said first application to generate a first result thereof; and
audibly rendering said first result using said speaker.

42. A pen device as described in Claim 41 wherein said method further comprises:
in response to a second user-written data in said second bounded area, recognizing said second user-written data as a second expression and automatically applying said second expression to said second application to generate a second result thereof; and
audibly rendering said second result using said speaker.

43. A pen device as described in Claim 41 wherein said defining said first bounded area to said first application comprises:
recognizing that said first application is selected in response to said pen device interacting with an image on said writable surface;
prompting the drawing of said first bounded area on said surface using said speaker;
defining said first bounded area in response to the drawing thereof using said pen device; and
associating said first bounded area with said first application.

44. A pen device as described in Claim 43 wherein said defining said second bounded area to said second application comprises:
recognizing that said second application is selected in response to said pen device interacting with an image on said writable surface;
prompting the drawing of said second bounded area on said surface using said speaker;
defining said second bounded area in response to the drawing thereof using said pen device; and
associating said second bounded area with said second application.

45. A method of accepting input from a user, comprising:
recognizing an actuation of a pen device within a bounded area of a writable surface;
accessing a function of the pen device related to the bounded area upon the actuation;
providing an output in accordance with the function; and
associating the function with the bounded area.

46. The method of Claim 45, wherein the output comprises an audio output related to the function.

47. The method of Claim 46, wherein the audio output is provided via a pen device.

48. The method of Claim 47; wherein the audio output is provided via a second device in communication with the pen device.

49. The method of Claim 45, wherein the output comprises a visual output related to the function.

50. The method of Claim 49, wherein the visual output is provided via a pen device.

51. The method of Claim 50, wherein the visual output is provided via a second device in communication with the pen device.
